# DEMANDE DE BREVET EUROPEEN

(11) **EP 0 560 705 A1**
(43) Date de publication de la demande: **15.09.1993**
(21) Numéro de dépôt: 93470005.5
(22) Date de dépôt: 19.02.1993
(51) Int. Cl.: B65D 33/16, F16B 2/10, B42F 1/02

(54) **Dispositif amovible d'obturation de l'orifice d'un emballage souple de produit liquide, semi-liquide ou pâteux**

(30) Priorité: 10.03.1992 CH 752/92
(71) Demandeur: Huguenin, Freddy, CH-1005 Lausanne (CH)
(72) Inventeur: Huguenin, Freddy, CH-1005 Lausanne (CH)
(74) Mandataire: Poupon, Michel

(57) **Abrégé**

Le dispositif est constitué par une pince à ressort (13) dont les deux mâchoires (9)présentent une surface d'appui concave formée par un bourrelet périphérique (7) et dont la conformation permet, par contact périphérique entre elles, de former une chambre étanche (8) d'étendue supérieure à celle de l'orifice d'écoulement du produit contenu dans un emballage souple, de manière à pouvoir enfermer dans cette chambre la zone de l'emballage présentant cet orifice, dans des buts d'hygiène et de propreté.

## Description

La présente invention a pour objet un dispositif amovible d'obturation de l'oriificed'un emballage souple de produit liquide, semi-liquide ou pâteux, constitué par une pince dont les deux mâchoires sont destinées à être appliquées de part et d'autre des parois de l'emballage sur la zone présentant l'orifice à obturer et comportant un moyen pour maintenir temporairement les deux mâchoires contre cette zone.

L'emballage souple de produit liquide, semi-liquide ou pâteux est universellement apprécié pour son gain économique à la production, son inviolabilité et, surtout, sa faible charge pour l'environnement.

En contre-partie de ces avantages, et au niveau du consommateur, l'emballage souple présente l'inconvénient, une fois ouvert, de nécessiter le transvasement du produit qu'il contient dans un récipient rigide pour pouvoir le consommer.

S'il n'effectue pas ce transfert, l'usager doit introduire l'emballage dans un récipient approprié à son maintien, ce qui n'est pas évident, ou bien le suspendre à l'un des ustensiles connus prévus à cet effet avant de l'ouvrir pour en soutirer le produit.

Lorsqu'il reste du produit à consommer ultérieurement dans l'emballage, il est de bon usage d'obturer son orifice par un moyen quelconque afin de protéger ce reste contre la pollution et le contact de l'air, et pour éviter toute salissure pendant ses déplacements.

En l'absence de dispositif spécialement conçu à cet effet, l'usager se sert par exemple d'une attache de bureau ou d'une pince à linge, qu'il place soit en arrière de l'orifice lorsque celui-ci résulte d'un découpage ou de l'arrachage d'un angle de l'emballage, soit sur un pli de sa paroi préalablement exécuté sur la zone présentant cet orifice, dans le cas d'un opercule.

Cependant, ces moyens sommaires d'obturation présentent l'inconvénient, lors de leur pose, d'étaler du produit résiduel sur ou entre les parois pressées, vers l'extérieur par effet de tartinage dû à la pression. Il résulte de ce phénomène que le produit étalé sèche, poisse et dégage des odeurs désagréables, ce qui n'est pas hygiénique, et peut dégrader la qualité et le goût du produit restant consommé ultérieurement.

Un dispositif décrit dans le document F-1223703, permet à la fois de soutenir l'emballage souple et d'obturer son orifice. Ce dispositif est constitué par une armature de maintien de l'emballage, préhensi- ble et/ou susceptible d'être posée sur une surface plane, présentant dans sa partie supérieure une monture circulaire formant un ressort enserrant deux mâchoires à faces de serrage parallèles. Les mâchoires sont prévues pour maintenir l'emballage par pinçage de ses arêtes supérieures et également pour obturer son orifice de versement par déplacement le long de ces arêtes jusque sur la zone présentant cet orifice.

Les deux mâchoires et la monture circulaire de ce dispositif constituent une pince du genre de celle définie en début d'exposé à laquelle se rapporte l'invention, mais cette pince présente les mêmes inconvénients que les moyens sommaires précités, attache de bureau et pince à linge, résultant de l'étalement du produit vers l'extérieur, entre les parois pressées de l'emballage, dû à la pression des deux mâchoires.

L'invention a pour but de réduire l'effet d'étalement du produit contenu dans un emballage souple lors de la pose, sur son dispositif d'écoulement, d'un dispositif d'obturation du genre-décrit en début d'exposé.

Acet effet, le dispositif selon l'invention est caractérisé en ce que chacune des deux mâchoires de la pince présente une surface d'appui concave de conformation propre à former, par contact périphérique avec son homologue, une chambre étanche d'étendue supérieure à celle de l'orifice à obturer.

De la sorte, lors de la pose de ce dispositif d'obturation sur la zone de l'emballage présentant l'orifice d'écoulement, la majeure partie, voire la totalité du produit résiduel situé entre ou éventuellement sur les parois de cette zone est enfermée dans la chambre étanche qui se forme entre les deux mâchoires à la fermeture de la pince.

Le produit enfermé est à l'abri de l'air et de toutes pollutions, et garde ses qualités originelles qu'il restitue à la prochaine consommation, cependant que la pince elle-même reste propre.

Un maximum d'hygiène et de propreté est ainsi obtenu en ce qui concerne la solution du problème posé.

Le dessin annexé représente, à titre d'exemples, cinq formes d'exécution de l'objet de l'invention.

Sur ce dessin, les coupes et demi-coupes verticales mentionnées ci-après sont inscrites dans le plan vertical de symétrie de chacune de ces formes d'exécution.

Les figures 1 et 2 sont respectivement une vue en plan et une vue de profil en demi-coupe verticale de la première forme d'exécution.
Les figures 3 et 4 sont respectivement une vue en plan et une vue de profil en demi-coupe verticale de la seconde forme d'exécution.
Les figures 5 et 6 sont respectivement une vue en plan et une vue de profil en demi-coupe verticale de la troisième forme d'exécution.
La figure 7 montre la troisième forme d'exécution dans deux positions différentes.
La figure 8 est une coupe verticale de la quatrième forme d'exécution.
La figure 9 est une coupe verticale de la cinquième forme d'exécution.

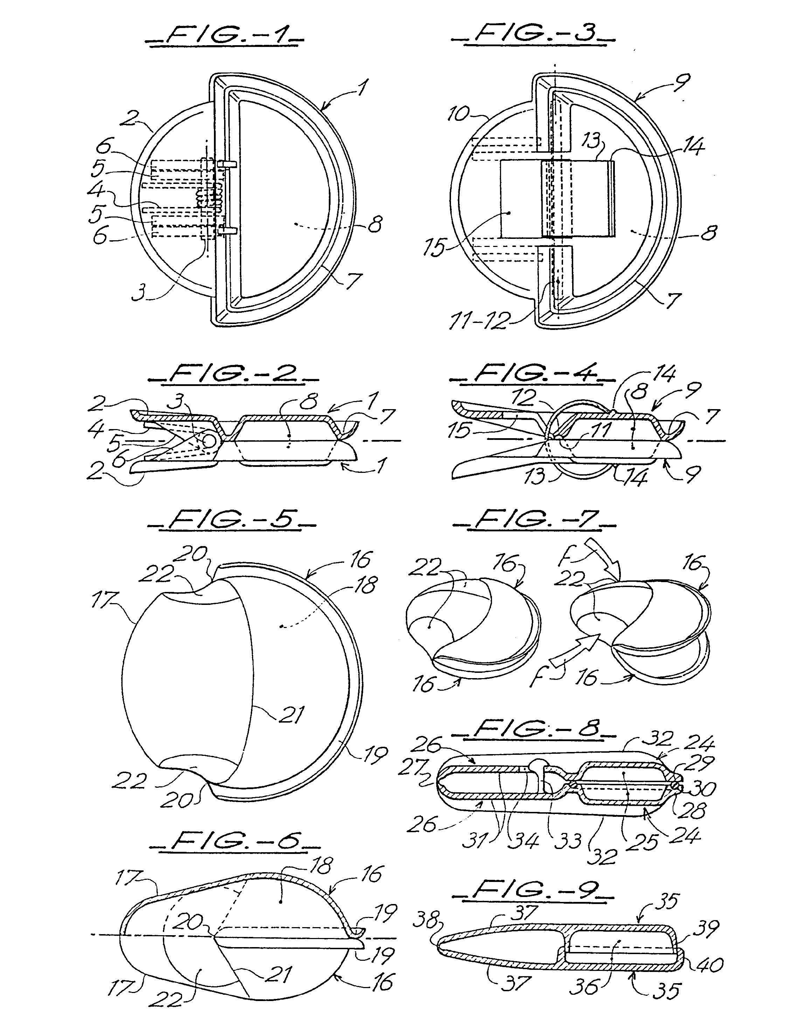

Dans sa première forme d'exécution représentée figures 1 et 2, le dispositif se compose de deux mâchoires 1 à monture intégrée 2, indépendantes l'une de l'autre, reliées entre elles par un axe d'articulation 3 et maintenues pressées l'une contre l'autre par un ressort 4, le tout formant une pince de serrage manipulable par les montures 2.

La liaison par l'axe d'articulation 3 se fait par introduction de celui-ci au travers de paliers 5 et 6 solidaires deux par deux des montures 2 et entre lesquels est placé le ressort 4, autour de cet axe 3.

Chacune des deux mâchoires 1 de la pince présente une surface d'appui concave formée ici par une sorte de bourrelet périphérique continu 7 constitué par une saillie de sa paroi, de manière à former, par contact périphérique avec son homologue, une chambre étanche 8. L'étendue de cette chambre 8 est prévue supérieure à celle de l'orifice d'écoulement du produit contenu dans un emballage souple pour l'obturer en l'enfermant dans cette chambre. Le bourrelet continu 7 présente ici un contour géométrique composé d'une partie rectiligne parallèle à l'axe d'articulation 3, proche de celui-ci , et d'un arc de cercle joignant les deux extrémités de cette partie rectiligne.

Les deux montures 2 ont également un contour en arc de cercle à l'extérieur de l'axe 3, du côté opposé à la mâchoire 1, mais de moindre étendue réduite au nécessaire pour couvrir et maintenir l'articulation à ressort dont elles prennent la poussée.

Les deux pièces formant les deux mâchoires 1 à monture intégrée 2 sont ici de conformations identiques et égales, à l'exception toutefois des paliers 5 et 6 qui sont décalés dans la direction de l'axe 3 pour permettre leur alignement sur cet axe, les uns 5 à l'intérieur des autres 6.

Dans sa deuxième forme d'exécution représentée figures 3 et 4, le dispositif comporte deux mâchoires 9 à monture intégrée 10 de même conformation que dans la première forme d'exécution en ce qui concerne leurs contours et la chambre 8 formée par le bourrelet périphérique continu 7.

Mais ici leur articulation est formée par un boudin 11 en saillie, intégré à la paroi de l'une des deux mâchoires, engagé dans une rainure 12 formant une sorte de demi-palier de la paroi de l'autre mâchoire. Le ressort est ici constitué par un anneau ouvert 13 prenant appui par chacune de ses deux extrémités sur une butée 14 intégrée à la paroi de chacune des deux mâchoires 9, au-dessus et sensiblement au milieu de sa partie formant la chambre 8, et passant au travers d'une ouverture 15, en arrière de l'articulation 11-12.

Le ressort en anneau ouvert 13 assure ici à la fois le maintien des deux mâchoires 9 sur l'articulation 11-12 et leur serrage.

Dans cette seconde forme d'exécution, réalisable entièrement en matière plastique, le dispositif présente l'avantage de faciliter son démontage et son remontage, motivés par exemple par un nettoyage des trois seules pièces qui le composent.

Dans sa troisième forme d'exécution représentée figures 5, 6 et 7, le dispositif se présente sous la forme d'une coquille d'une seule pièce fonctionnant par déformation élastique de sa paroi. Il est réalisé à cet effet en matériau semi-élastique, tel que par exemple en matière plastique à fort module d'élasticité.

Les deux mâchoires 16 et leurs montures 17 qui constituent la coquille en question forment une chambre 18 occupant la totalité de son volume intérieur.

Les deux mâchoires 16, en forme de calottes sphériques tronquées, sont bordées d'un bourrelet périphérique 19 formé par une remontée de paroi et ce bourrelet est étendu ici sur un peu plus d'un demi- cercle, d'un bord à l'autre de la ligne de troncature 21 limitant la calotte sphérique formant chacune des deux mâchoires 16.

Les deux montures 17 forment une seule pièce raccordée géométriquement à la ligne de troncature 21 et complètent, en vue en plan selon la figure 5, l'arc de cercle formé par le bourrelet 19 des mâchoires; elles présentent en arrière des deux extrémités 20 du bourrelet 19, une paroi semi-circulaire 22 incurvée vers l'intérieur de la chambre 18 destinée à faciliter la saisie du dispositif, par exemple entre le pouce et l'index d'une main et, par serrage entre ces deux doigts, à ouvrir les deux mâchoires 16 de la pince ainsi formée, par déformation élastique des parois de la chambre 18.

Cette déformation, de type comparable à celle présentée dans la nature par une plante, le muflier des jardins, plus communément appelé gueule de loup, est illustré par la figure 7 qui montre le dispositif fermé à gauche, et ouvert à droite par pression selon les deux flèches f sur les deux parois 22 précitées.

Ce dispositif peut être réalisé par l'assemblage de deux demi coquilles présentant chacune une mâchoire 16 et une monture 17, cet assemblage étant effectué par exemple par collage des deux montures 17 selon le plan de joint des deux mâchoires 16. Les deux demi coquilles étant ainsi rigoureusement identiques peuvent être réalisées de manière peu coûteuse par moulage.

Selon la forme choisie et la qualité élastique du matériau utilisé, ce dispositif peut aussi se mouler d'une seule pièce, par exemple en reliant les deux montures par une jonction commune sensiblement rectiligne formant une articulation autour de laquelle les montures peuvent être pivotées pour rabattre les mâchoires l'une contre l'autre, et en conformant les parois en regard des deux montures de manière à ce qu'elles présentent des zones d'accrochage par interpénétration grâce auxquelles lesdites montures pourront être étroitement accolées l'une à l'autre selon le plan de joint des mâchoires.

Quelle que soit la manière dont sont réalisées et assemblées les deux demi-coquilles de cette forme d'exécution, il est possible d'augmenter le serrage des mâchoires à l'aide d'une barrette ou d'un fil ressort longeant la jonction des montures et s'opposant à la déformation élastique des parois de la chambre formée par les mâchoires et leurs montures.

Dans la quatrième forme d'exécution représentée figure 8 le dispositif comporte deux mâchoires creuses 24 délimitant une chambre 25, à montures 26 articulées par une jonction 27 constituée par un amincissement de leurs parois 31, de façon à pouvoir réaliser ces quatre éléments en une seule pièce moulée.

Le bourrelet périphérique 28 de l'une des deux mâchoires est garni d'un joint périphérique 29 en matériau élastique partiellement encastré, pour son maintien, dans une rainure périphérique 30.

La paroi 31 de chaque ensemble mâchoire 24 et monture 26 est renforcée par deux raidisseurs parallèles 32. Entre ces raidisseurs est prévu un moyen de retenue en position fermée de la pince constitué par l'encliquetage d'un cliquet élastique 33 dans une rainure à cran 34, ces éléments étant situés entre les mâchoires 24 et la jonction 27. Le cliquet 33 dépasse de la rainure 34, entre les raidisseurs 32 pour pouvoir être dégagé par simple pression d'un doigt pour ouvrir la pince.

Dans cette forme d'exécution le joint élastique 29 permet d'absorber les différences entre les épaisseurs de parois d'emballages souples de différents types en s'écrasant plus ou moins.

En vue en plan, non représentée, ce dispositif peut présenter n'importe quelle forme géométrique choisie, comme d'ailleurs la cinquième forme d'exécution représentée figure 9.

Dans cette cinquième forme d'exécution, le dispositif comporte deux mâchoires creuses 35 formant une chambre 36, dont les parois 37 prolongées constituent la monture et se terminent par une jonction 38 constituée ici également par une réduction de leur épaisseur jouant le rôle d'articulation.

Chaque mâcchoire 35 comporte une bordure relevée 39, respectivement 40, sur tout son pourtour qui peut être de géométrie quelconque, et les deux bordures ainsi relevées sont dimensionnées pour pouvoir s'interpénétrer, ici la bordure 39 à l'intérieur de la bordure 40, de sorte que leur appui ne se fait plus ici par apposition mais par-pénétration.

Au serrage de la pince ainsi constituée autour des parois d'un emballage souple, ces parois se trouvent enserrées entre les bordures 39 et 40 des mâchoires 35 qui se prêtent par leur élasticité propre pour compenser leur épaisseur, et ceci fait que le serrage obtenu dispense de l'adjonction d'un moyen pour assurer le maintien de la pince en position fermée. Un simple effort de traction sur l'emballage suffit à le dégager des mâchoires qui s'ouvrent alors d'elles-mêmes. Il est aussi possible d'ouvrir la pince en passant un doigt entre les deux parois 37 de la monture.

Bien entendu, les cinq formes d'exécution données en exemple ne sont pas limitatives. Elles montrent au contraire la grande latitude de formes et de structures applicable dans le cadre de l'invention qui impose seulement, pour obtenir l'effet recherché, la formation, à la fermeture des mâchoires du dispositif et entre elles, d'une chambre étanche d'étendue supérieure à celle de l'orifice d'écoulement du produit contenu dans un emballage souple.

## Revendications

1. Dispositif amovible d'obturation de l'orifice d'un emballage souple de produit liquide, semi-liquide ou pâteux, constitué par une pince dont les deux mâchoires sont destinées à être appliquées de part et d'autre des parois de l'emballage sur la zone présentant l'orifice à obturer et comportant un moyen pour maintenir temporairement les deux mâchoires contre cette zone, caractérisé en ce que chacune des deux mâchoires (1, 9, 16, 24, 35) de la pince présente une surface d'appui concave de conformation propre à former, par contact périphérique avec son homologue, une chambre étanche (8, 18, 25, 36) d'étendue supérieure à celle de l'orifice à obturer.

2. Dispositif selon la revendication 1, caractérisé en ce que la concavité de la surface d'appui de chacune des deux mâchoires de la pince est formée par un bourrelet périphérique continu (7, 28, 39-40).

3. Dispositif selon la revendication 2, cractérisé en ce que le bourrelet périphérique d'au moins l'une des deux mâchoires est constitué par une saillie (7, 19, 28) de sa paroi.

4. Dispositif selon la revendication 2, caractérisé en ce que le bourrelet périphérique (28) d'au moins l'une des deux mâchoires (24) comporte un joint (29) en matériau élastique partiellement encastré dans une rainure périphérique (30).

5. Dispositif selon la revendication 1, caractérisé en ce que les deux mâchoires (1,16) de la pince sont de conformations identiques et égales.

6. Dispositif selon la revendication 1, caractérisé en ce que les deux mâchoires (9, 24, 35) de la pince sont de conformations différentes.

7. Dispositif selon la revendication 1, caractérisé en ce que les parois des deux mâchoires (16) sont respectivement reliées aux parois d'une monture (17) pour former avec ces dernières une coquille formant la chambre (18), et en ce que les deux mâchoires ainsi reliées s'ouvrent par déformation élastique provoquée des parois de la coquille et se referment par élasticité de ces parois.

8. Dispositif selon la revendication 1, caractérisé en ce que les deux mâchoires (35) de la pince comportent des bords périphériques relevés (39, 40) formant entre eux la chambre (36), qui sont dimensionnés pour pénétrer l'un (39) dans l'autre (40).
